# EUROPÄISCHE PATENTSCHRIFT

(11) **EP 3 253 994 B1**
(45) Veröffentlichungstag und Bekanntmachung des Hinweises auf die Patenterteilung: **06.04.2022**
(21) Anmeldenummer: 16702700.2
(22) Anmeldetag: 01.02.2016
(51) Int. Cl.: F16G 13/16

(54) **KETTENGLIED UND HANDHABUNGSKETTE MIT KETTENGLIED**
CHAIN LINK AND HANDLING CHAIN HAVING A CHAIN LINK
MAILLON ET CHAÎNE DE MANUTENTION À MAILLON

(30) Priorität: 02.02.2015 DE 202015100479 U
(43) Veröffentlichungstag der Anmeldung: 13.12.2017
(73) Patentinhaber: Igus GmbH, 51147 Köln (DE)
(72) Erfinder: BLASE, Frank, 51429 Bergisch Gladbach (DE); THEISS, Georg, 50678 Köln (DE)
(74) Vertreter: Lippert Stachow Patentanwälte Rechtsanwälte
(86) Internationale Anmeldenummer: PCT/EP2016/052066
(87) Internationale Veröffentlichungsnummer: WO 2016/124541

(56) Entgegenhaltungen:
- US-A- 3 628 834
- US-A- 5 174 439
- US-A1- 2003 136 456
- US-A1- 2008 277 248

## Beschreibung

Die Erfindung betrifft ein Kettenglied für eine Handhabungskette, wobei die Handhabungskette eine Vielzahl von in Längsrichtung der Handhabungskette aneinander angrenzenden Kettengliedern aufweist, die in ihren angrenzenden ersten und zweiten Verbindungsbereichen jeweils um eine sich in Querrichtung erstreckende erste Schwenkachse verschwenkbar miteinander verbunden sind, wobei das Kettenglied zur Ausbildung einer als Scharniergelenkverbindung ausgelegten Schwenkverbindung mit dem jeweils angrenzenden Kettenglied ausgelegt ist und einen plattenartigen Körper mit einer ersten Seite, einer zweiten Seite und zwei in Längsrichtung der Handhabungskette weisenden Schmalseiten und zwei in Querrichtung zur Längsrichtung der Handhabungskette weisenden Schmalseiten aufweist, die die erste Seite und die zweite Seite miteinander verbinden, der erste Verbindungsbereich an einer der in Längsrichtung weisenden Schmalseiten und der zweite Verbindungsbereich an der anderen in Längsrichtung weisenden Schmalseiten angeordnet sind, wobei der erste Verbindungsbereich so ausgebildet ist, dass bei Verbindung des Kettenglieds mit einem jeweils benachbarten Kettenglied die Scharniergelenkverbindung zusätzlich zu der Verschwenkung um die erste Schwenkachse mindestens eine weitere Relativbewegung der Kettenglieder ermöglicht, und der erste Verbindungsbereich des Kettenglieds als erstes Verbindungsmittel mindestens eine zur ersten Schwenkachse axiale Scharnieröffnung mit einem Langlochprofil aufweist, der zweite Verbindungsbereich des Kettenglieds als zweites Verbindungsmittel mindestens einen Bolzen aufweist, der axial zur ersten Schwenkachse liegt, wobei der mindestens eine Bolzen in eine Scharnieröffnung des ersten Verbindungsbereichs eines benachbarten Kettenglieds eingreifbar ist, so dass zur Verbindung zweier benachbarter Kettenglieder die ersten und zweiten Verbindungsmittel der zugeordneten Verbindungsbereiche der beiden Kettenglieder in einer Fügeposition, in der die Kettenglieder in einem Winkel um 90° anstellbar sind, unter Eingriff des Bolzens des einen Kettenglieds in das C-Profil der Scharnieröffnung des anderen Kettenglieds übereinander bringbar und in Eingriff bringbar sind, wobei die beiden benachbarten Kettenglieder an den Verbindungsmitteln aus der Fügeposition in eine Arbeitsposition hinein verschwenkbar sind, in der die beiden benachbarten Kettenglieder in einem Winkel um 180° anstellbar sind, und wobei das Kettenglied eine Blockiervorrichtung aufweist, mit der benachbarte Kettenglieder gegen eine Loslösung der Verbindung in der Arbeitsposition sicherbar sind. Die Erfindung betrifft ferner eine Handhabungskette mit derartigen Kettengliedern.

Unter einer Handhabungskette wird insbesondere eine Förderkette zum Transport beispielsweise von Gütern oder Werkzeuge zur Ausführung eines Arbeitsvorganges oder eine Energieführungskette zur Aufnahme und Führung von Energieleitungen zwischen zwei relativ zueinander beweglichen Anschlusspunkten verstanden und zwar insofern, dass über die Handhabungskette Güter oder Werkzeuge zu einem bestimmten Punkt befördert bzw. Energieleitungen zu einem bestimmten Punkt geführt werden. Insbesondere werden unter Handhabungskette nicht eine Zugmittelkette zur Übertragung von Drehkräften sowie nicht eine Schmuckkette oder Bandkette verstanden.

Zur leichteren Verfahrbarkeit der Handhabungskette sind eine gute und leichte Beweglichkeit des Körpers bzw. der den Körper aufbauenden Kettenglieder vorteilhaft.

In der US 2008/277248 A1 wird ein gattungsgemäßes Kettenglied der eingangs genannten Art für eine Handhabungskette mit einer Vielzahl von Kettengliedern beschrieben, die jeweils zur Ausbildung einer als Scharniergelenkverbindung ausgelegten Schwenkverbindung verschwenkbar miteinander verbunden sind. Die Scharniergelenkverbindung ermöglicht zusätzlich zu der Verschwenkung um die erste Schwenkachse mindestens eine weitere Relativbewegung der unter Ausbildung der Scharniergelenkverbindung miteinander verbundenen Gelenkpartner. Hierzu weist das Kettenglied als Scharnieröffnung jeweils in dem einen Verbindungsbereich ein sich in Längsrichtung erstreckendes Langloch und in dem in Längsrichtung gegenüberliegenden anderen Verbindungsbereich zwei in Querrichtung über einen Zwischenraum beabstandete Bolzenabschnitte auf. In der Scharniergelenkverbindung greifen die Bolzenabschnitte paarweise seitlich in das zugeordnete Langloch eines angrenzenden Kettenglieds ein und sind in demselben in Längsrichtung verschieblich gelagert und ermöglichen zudem eine relative Verschwenkung der benachbarten Kettenglieder um eine in Höhenrichtung senkrecht zur Längsrichtung und zur Querrichtung weisende zweite Schwenkachse.

Die US 5 174 439 A offenbart ein Kettenglied für eine Handhabungskette mit um eine erste Schwenkachse senkrecht zur Längsrichtung unter Ausbildung einer Scharniergelenkverbindung verschwenkbar miteinander verbundenen Kettengliedern. Die Scharniergelenkverbindung wird durch von einem Scharnierbolzen durchgriffen Scharnieröffnungen erstellt, wobei die benachbarten Kettenglieder in der Scharniergelenkverbindung zusätzlich relativ zueinander in Längsrichtung verschieblich und um eine sich in Höhenrichtung senkrecht zur Längsrichtung und zur Querrichtung erstreckende zweite Schwenkachse verschwenkbar angeordnet sind.

Aus der US 3 628 824 A ist ein Kettenglied für eine Zugmittelkette bekannt, deren Kettenglieder an ihren Verbindungsbereichen über eine sich in Höhenrichtung erstreckende Ausnehmung ineinander gesteckt und mit Verschwenkung um eine erste Schwenkachse in die Scharniergelenkverbindung hinein gebracht werden.

Die in der US 2003/136456 A1 beschriebene Handhabungskette weist Kettenglieder mit Seitenlaschen auf. Hierbei sind in den Seitenlaschen oder in den Gelenkverbindungen elastisch deformierbare Bereiche zur Längenänderung der Handhabungskette vorgesehen. Diese Längenänderung erfolgt in Form einer Dehnung oder Stauchung der elastisch deformierbaren Bereiche, die konstruktionsbedingt eine kraftmechanische Schwachstelle hinsichtlich der Zugfestigkeit der Handhabungskette darstellen.

Eine weitere Handhabungskette mit Kettengliedern wird in der DE 20 2012 107 687 A1 beschrieben, wobei die Kettenglieder über ein Kreuzgelenk mit einer ersten Schwenkachse in Querrichtung und einer weiteren Schwenkachse in Höhenrichtung miteinander verbunden sind.

Eine Aufgabe der Erfindung ist, ein gattungsgemäßes Kettenglied bzw. eine gattungsgemäße Handhabungskette mit einem Körper aus schwenkbeweglich miteinander verbundenen Kettengliedern bereitzustellen, das bzw. die eine verbesserte Schwenkbeweglichkeit benachbarter Kettenglieder und einfachere Konstruktion und Herstellbarkeit aufweisen.

Die gestellte Aufgabe wird erfindungsgemäß für ein Kettenglied durch die Merkmale des Anspruches 1 und für eine Handhabungskette mit derartigen Kettengliedern durch die Merkmale des Anspruchs 7 gelöst. Vorteilhafte Weiterbildungen werden in den Unteransprüchen beschrieben. Die gestellte Aufgabe wird bereits dadurch gelöst, dass bei einem Kettenglied der eingangs genannten Art das Langlochprofil der mindestens einen zur ersten Schwenkachse axialen Scharnieröffnung sich in Höhenrichtung senkrecht zur Längsrichtung und zur Querrichtung erstreckt und als ein sich in Höhenrichtung zur zweiten Seite hin öffnendes C-Profil ausgebildet ist und der mindestens eine Bolzen einen kreisförmigen Querschnitt aufweist.

Der Körper der Handhabungskette mit den erfindungsgemäßen Kettengliedern kann beispielsweise als Grundform ein flaches Band aus gelenkig miteinander verbunden Kettengliedern aufweisen. Der Körper kann somit als Stütze, als "Wirbelsäule" für die Handhabungskette dienen. Das Band kann umfängliche Schmalseiten und diese verbindende gegenüberliegende größere Seiten, das heißt eine erste Seite und eine zweite Seite, aufweisen. Die Handhabungskette kann in einer Handhabungsketteneinrichtung an der ersten Seite an Stütz- und/oder Umlenkrollen gestützt und/oder geführt werden. Es können insbesondere seitlich an dem Körper der Handhabungskette ein Transportraum für die Anordnung des zu transportierende Guts und/oder ein Führungsraum zur Aufnahme und Führung der Energieleitungen vorgesehen sein. Diese Räume können an der ersten Seiet und/oder an der zweiten Seite angeordnet sein. Es kann an der ersten Seite der Führungsraum und an der zweiten Seite der Transportraum vorgesehen sein. Der Führungsraum kann auch in einem in dem Körper vorgesehenen, vorzugsweise seitlich öffenbaren Führungskanal angeordnet sein

Konstruktiv unaufwändig weist der erste Verbindungsbereich des Kettengliedes als erstes Verbindungsmittel mindestens eine zur ersten Schwenkachse axiale erste Scharnieröffnung mit einem ungebogenen, also linearen Langlochprofil als Kulissenführung auf. Damit kann eine translatorische Relativbewegung der Gelenkpartner in dem Langloch erfolgen. Die Translation erfolgt in Längserstreckung des Langlochprofils. Die Erstreckung des Langlochprofiles bestimmt die Richtung der Translation. Da es ungebogen ist, ist die Translation rein linear. Das Langlochprofil erstreckt sich senkrecht zu den Schwenkachsen, d.h. in Höhenrichtung. Die Höhenrichtung erstreckt sich senkrecht zu der Längsrichtung und Querrichtung beziehungsweise senkrecht zu einer Kettengliedebene.

Der Gelenkpartner kann so in das Langloch eingreifen, dass zusätzlich oder anstatt der Translation ein Verkippen des Gelenkpartners in dem Langloch möglich wird. Das Verkippen kann als Verschwenkung um eine zweite Schwenkachse ausgeführt werden. Diese ist, da sie durch die Kippbewegung in dem Langloch erfolgt, senkrecht zur ersten Schwenkachse. In beiden Fällen, dem Verschwenken um die zweite Schwenkachse und der Translation in dem Langloch, kann der jeweilige Gelenkpartner in Begrenzung seiner Relativbewegung jeweils endseitig in dem Langlochprofil anschlagen.

Der plattenartige Körper des Kettenglieds kann mit einer zur Höhenrichtung h axialen Dicke und mit den beiden größeren Seitenflächen ausgebildet sein, wobei diese in Einbaulage in die Handhabungskette einen Abschnitt der ersten Seite beziehungsweise der zweiten Seite der Handhabungskette bilden. Die erste Scharnieröffnung kann mittig zu der Dicke des Kettengliedes beziehungsweise der Handhabungskette angeordnet sein. Die Längserstreckung des Langlochprofils kann bis 95% der Dicke, insbesondere bis 90% der Dicke oder etwa 85% der Dicke betragen. Je größer der Anteil der Längserstreckung an der Dicke ist, desto größer ist die mögliche Beweglichkeit der Gelenkpartner zueinander.

Der Körper des Kettengliedes kann einstückig insbesondere als Kunststoff-Spritzgussteil hergestellt sein.

Der erste Verbindungsbereich weist einen in Längsrichtung beabstandeten zweiten Verbindungsbereich zur Ausbildung der Scharniergelenkverbindung mit einem weiteren Gelenkpartner auf, und zwar an dessen ersten Verbindungsbereich mit der mindestens einen ersten Scharnieröffnung.

Der zweite Verbindungsbereich weist als zweites Verbindungsmittel zumindest einen zumindest im Wesentlichen kreisrunden Bolzen zum Eingriff in die erste Scharnieröffnung des zugeordneten Gelenkpartners auf. Dieser Bolzen kann einstückig an dem Kettenglied angeformt angeordnet sein. Damit ist bei dieser Ausbildungsform der Scharniergelenkverbindung kein weiteres einzelnes Bauteil erforderlich. Die Verbindungsbereiche können jeweils endseitig bzw. in einem Endbereich des jeweiligen Kettengliedes angeordnet sein.

In einer Weiterbildung des Kettengliedes kann die mindestens eine erste Scharnieröffnung mit dem sich öffnenden C-Profil zu ihrer Stabilisierung gegen eine zur ersten Schwenkachse radiale Aufweitung eine Verstärkung aufweisen. Diese kann als eine zur ersten Schwenkachse senkrecht angeordnete Verstärkungswand ausgebildet sein, die seitlich mit dem C-Profil verbunden ist. Somit kann die Verstärkungswand zur ersten Schwenkachse radiale Kräfte von dem C-Profil aufnehmen. Die Verstärkungswand kann die erste Scharnieröffnung senkrecht zur ersten Schwenkachse vorteilhaft mittig teilen.

Der Körper des Kettengliedes weist wie die Handhabungskette eine senkrecht zur Höhenrichtung angeordnete zweite Seite auf. Diese kann als Trägerin des zu diesem Kettenglied zugehörigen Abschnitts des Transportraums ausgebildet sein. Sie kann den Transportraum begrenzen. Es können an der zweiten Seite von derselben in Höhenrichtung wegstehenden Mitteln, insbesondere bügel- oder bogenförmige Haltemittel zur Aufnahme und Führung des Transportgutes, vorgesehen sein.

Das C-Profil ist bezüglich der Höhenrichtung axial und zwar in Richtung der von der zweiten Seite wegweisenden Flächennormalen oder in Richtung der wegstehenden Mittel geöffnet ausgebildet. Insbesondere dann, wenn zumindest jedes zweite Kettenglied der Handhabungskette derartige Haltemittel aufweist, können diese die Verschwenkung der Kettenglieder um die erste Schwenkachse begrenzen, indem diese endseitig seitlich gegeneinander anschlagen. Hierdurch kann, wie weiter unten in der Figurenbeschreibung ausgeführt, insbesondere während der Lagerung und Montage der Handhabungskette verhindert werden, dass ein über die Scharniergelenkverbindung verbundenes Kettenglied aus das C-Profil herausgleitet.

Die Haltemittel können zusammen mit dem Körper ein einstückiges Bauteil bilden. Vorzugsweise sind die Haltemittel jedoch nachträglich an dem Körper festlegbar angeordnet. Hierbei können die Haltemittel je nach Anforderung, beispielsweise in ihrer Ausbildung und/oder Dimensionierung baulich variieren. In der Handhabungskette kann zwar, muss aber nicht zwingend, jedes der Kettenglieder die Haltemittel aufweisen. Vorzugsweise sind die mit Haltemitteln versehenen Kettenglieder über die Handhabungskettenlänge gleich beabstandet angeordnet.

In einer Weiterbildung des Kettengliedes kann vorgesehen sein, dass, sich jeweils in Längsrichtung von dem Kettengliedweg weg erstreckend, in dem ersten Verbindungsbereich zumindest ein erster Vorsprung mit dem ersten Verbindungsmittel und in dem zweiten Verbindungsbereich zumindest ein zweiter Vorsprung mit dem zweiten Verbindungsmittel angeordnet sind. Zur verbesserten mechanischen Stabilität der Scharniergelenkverbindung und zur besseren Führung der beiden Verbindungspartner relativ zueinander können mehrere erste und zweite Vorsprünge vorgesehen sein. Kraftmechanisch günstig kann die Anzahl der in dem ersten Verbindungsbereich vorgesehenen ersten Vorsprünge um eins kleiner als die in dem zweiten Verbindungsbereich vorgesehenen zweiten Vorsprünge sein. Dies hat zur Folge, dass in Einbaulage jeder erste Vorsprung axial jeweils von zwei zweiten Vorsprüngen flankiert wird.

In Einbaulage können erste Scharnieröffnungen und der Bolzen bezüglich der Schwenkachse axial jeweils fluchtend zueinander angeordnet sein. Die Vorsprünge können zum leichteren Verschwenken der Kettenglieder der Handhabungskette bevorzugt um die erste Schwenkachse jeweils endseitig gerundet ausgebildet sein. In einer Ausführungsform des Kettengliedes können in dem ersten Verbindungsbereich mindestens zwei als erste Vorsprünge ausgebildete Vorsprünge und in dem zweiten Verbindungsbereich mindestens drei als zweite Vorsprünge ausgebildete Vorsprünge vorgesehen sind. Die Vorsprünge können bezüglich der ersten Schwenkachse axial aneinander anschließend und in alternierender Reihenfolge angeordnet sind. Die Vorsprünge benachbarter Kettengliede können in Verbindungsposition zahnartig ineinander greifen, wobei die Scharnieröffnungen der Vorsprünge bezüglich der ersten Schwenkachse axial fluchtend angeordnet sind. Die Vorsprünge können bezüglich der ersten Schwenkachse axial verschiebungsfest seitlich anliegen.

Für den Fall, dass das zweites Verbindungsmittel zumindest einen zumindest im Wesentlichen kreisrunden Bolzen zum Eingriff in die erste Scharnieröffnung des zugeordneten Gelenkpartners aufweist, kann sich der Bolzen in Richtung der zweiten Schwenkachse zwischen zwei zweiten Vorsprünge erstrecken. Für den Fall, dass das die erste Scharnieröffnung mit dem sich öffnenden C-Profil zu ihrer Stabilisierung gegen eine zur ersten Schwenkachse radiale Aufweitung eine zur ersten Schwenkachse senkrecht angeordnete Verstärkungswand aufweist, kann der Bolzen in dem Bereich der Verstärkungswand in zwei Bolzenabschnitte geteilt sein, die sich jeweils mit einem freien Ende bezüglich der ersten Schwenkachse unter Begrenzung eines Zwischenraums zum Eingriff der Verstärkungswand axial aufeinander zu erstrecken. Der Zwischenraum kann eine axiale Stärke gleich der Dicke der Verstärkungswand aufweisen.

Um eine Loslösung der Verbindung zweier benachbarter Kettenglieder in der Arbeitsposition, in der die Kettenglieder in einem Winkel um 180° angestellt sind, zu sichern, kann die Blockiervorrichtung mit jeweils einem endseitig an den in Querrichtung weisenden Schmalseiten und im ersten Verbindungsbereich des Kettenglieds angeordneten Blockiervorsprung und mit jeweils einer endseitig an den in Querrichtung weisenden Schmalseiten und im zweiten Verbindungsbereich des Kettenglieds angeordneten Blockieröffnung versehen sein, die zur zweiten Seite des Kettenglieds hin seitlich geöffnet ausgebildet ist, so dass ein im ersten Verbindungsbereich eines benachbarten Kettenglieds angeordneter Blockiervorsprung in die Blockieröffnung hineingleitbar ist, und die Blockieröffnung in Richtung von der zweiten Seite zur ersten Seiten hin eine seitliche Wandung aufweist, die als Anschlag der Bewegung eines benachbarten Kettenglieds mit seinem Blockiervorsprung in Richtung der Flächennormalen der ersten Seite entgegensteht.

Die Erfindung betrifft ferner eine Handhabungskette gemäß einer der zuvor und nachfolgend beschriebenen Ausführungsformen zum Transport von Gütern in Längsrichtung der Handhabungskette vorgesehen sein. Die Handhabungskette weist einen Körper aus einer Vielzahl von in Längsrichtung der Handhabungskette aneinander angrenzenden Kettengliedern gemäß einer der zuvor und nachfolgend beschriebenen Ausführungsformen auf. Die Kettenglieder sind in Verbindungsbereichen aneinander angrenzend jeweils in einer Scharniergelenkverbindung über eine sich in Querrichtung erstreckende erste Schwenkachse verschwenkbar miteinander verbunden. Der Körper kann bandartig ausgebildet sein.

Die Scharniergelenkverbindungen der Kettenglieder können jeweils einen weiteren Freiheitsgrad in Form einer zusätzlichen Relativbewegung der Gelenkpartner aufweisen. Die zusätzliche Relativbewegung kann in Form einer Verschwenkung der Gelenkpartner um eine sich in Längsrichtung erstreckende zweite Schwenkachse und/oder in Form einer senkrecht zu einer Handhabungskettenebene erfolgenden Translation bzw. senkrecht oder etwa senkrecht zu den Schwenkachsen erfolgenden Translation erfolgen.

Wie oben erläutert, sind benachbarte Kettenglieder jeweils über einen ersten Verbindungsbereich des einen Gelenkpartners und einen zweiten Verbindungsbereich des anderen Gelenkpartners miteinander verbunden.

Die ersten Verbindungsmittel weisen in Bereitstellungslage der Handhabungskette zumindest eine zur Querrichtung axiale erste Scharnieröffnung mit einem sich zumindest im Wesentlichen axial zur Höhenrichtung erstreckenden Langlochprofil auf, das als ein in Höhenrichtung geöffnetes C-Profil ausgebildet ist. Die zweiten Verbindungsmittel weisen zumindest einen zur ersten Schwenkachse zumindest im Wesentlichen axial angeordneten Bolzen auf, der in Verbindungsposition die erste Scharnieröffnung durchgreift.

Zur Verbindung zweier Gelenkpartner ist vorgesehen, dass die ersten und zweiten Verbindungsmittel der zugeordneten Verbindungsbereiche zweier Gelenkpartner in einer Fügeposition, in der die Gelenkpartner in einem Winkel um 90° angestellt sind, unter seitlichem Eingriff des Bolzens in das C-Profil der ersten Scharnieröffnung übereinander gebracht und in Eingriff gebracht werden. Anschließend können die beiden Gelenkpartner an den Verbindungsmitteln aus der Fügeposition in eine Arbeitsposition hinein verschwenkt werden, in der die Gelenkpartner in einem Winkel um 180° angestellt sind. In der Fügeposition können die Gelenkpartner gegen eine Loslösung der Verbindung in der Arbeitsposition gesichert sein.

Die Handhabungskette kann als Förderkette zum Transport beispielsweise von Gütern oder eines Werkzeuges zur Ausführung eines Arbeitsvorganges ausgebildet sein. Dieser Arbeitsvorgang kann beispielsweise das periodische Bedrucken eines Untergrundes, wie Stoff oder Papier, mittels eines Stempels als Werkzeug sein. Die Förderkette kann einen Transportraum zur Aufnahme des Gutes aufweisen, in dem auch das Werkzeug angeordnet sein kann. Die Handhabungskette kann auch als Führungskette zur Aufnahme und Führung von Versorgungsleitungen, wie insbesondere Energieleitungen, zwischen zwei relativ zueinander beweglichen Anschlusspunkten ausgebildet sein. Die Führungskette kann einen Führungsraum zur Führung der Versorgungsleitungen aufweisen. Die beiden Ausführungsformen der Handhabungskette können insbesondere hinsichtlich der Kettenglieder den gleichen oder sogar identischen Aufbau aufweisen. Sie können, aber müssen sich nicht zwangsläufig, hinsichtlich des Art und Anordnung der Räume zur Anordnung des Gutes und/oder des Werkzeuges bzw. hinsichtlich der Führung der Versorgungsleitungen unterscheiden. Damit können die beiden Ausführungsformen der Handhabungskette jeweils gleich einsetzt werden.

Ohne die vorliegende Erfindung darauf zu begrenzen, wird sie im Folgenden anhand mehrerer in einer Zeichnung dargestellten Ausführungsformen des Kettengliedes beziehungsweise der Handhabungskette mit Kettengliedern näher erläutert. In der Zeichnung zeigen:
Figur 1 eine perspektivische Aufsicht einer ersten Ausführungsform einer Handhabungskette als Förderkette und zwar einen Ausschnitt mit wenigen Kettengliedern gemäß einer ersten Ausführungsform unter Fortlassung von möglichen Antrieben, Unterstützungsrollen und Anschlüssen,
Figuren 2a und 2b eine perspektivische Unteransicht bzw. Aufsicht auf ein Kettenglied gemäß der ersten Ausführungsform in Figur 1,
Figuren 3a bis 3d jeweils eine Ansicht des Kettengliedes gemäß Figur 2,
Figuren 4 bis 6 jeweils Ansichten bzw. Schnittansichten zum Zusammenfügen zweier Kettenglieder in drei Schritten
Figuren 7a bis 7c jeweils eine Ansicht bzw. eine Schnittansicht dreier miteinander verbundenen Kettengliedern in einer ersten Relativposition zueinander,
Figuren 8a bis 8c jeweils eine Ansicht bzw. eine Schnittansicht dreier miteinander verbundenen Kettengliedern in einer zweiten Relativposition zueinander,
Figuren 9a bis 9d jeweils eine Ansicht bzw. eine Schnittansicht dreier miteinander verbundenen Kettengliedern in einer dritten Relativposition zueinander,
Figuren 10a bis 10d jeweils eine Ansicht bzw. eine Schnittansicht dreier miteinander verbundenen Kettengliedern in einer vierten Relativposition zueinander und
Figur 11 eine perspektivische Aufsicht einer zweiten Ausführungsform der Handhabungskette als Energieführungskette und zwar einen Ausschnitt mit wenigen Kettengliedern gemäß einer zweiten Ausführungsform mit Haltemitteln unter Fortlassung möglicher Anschlüssen und Anschlussgliedern.

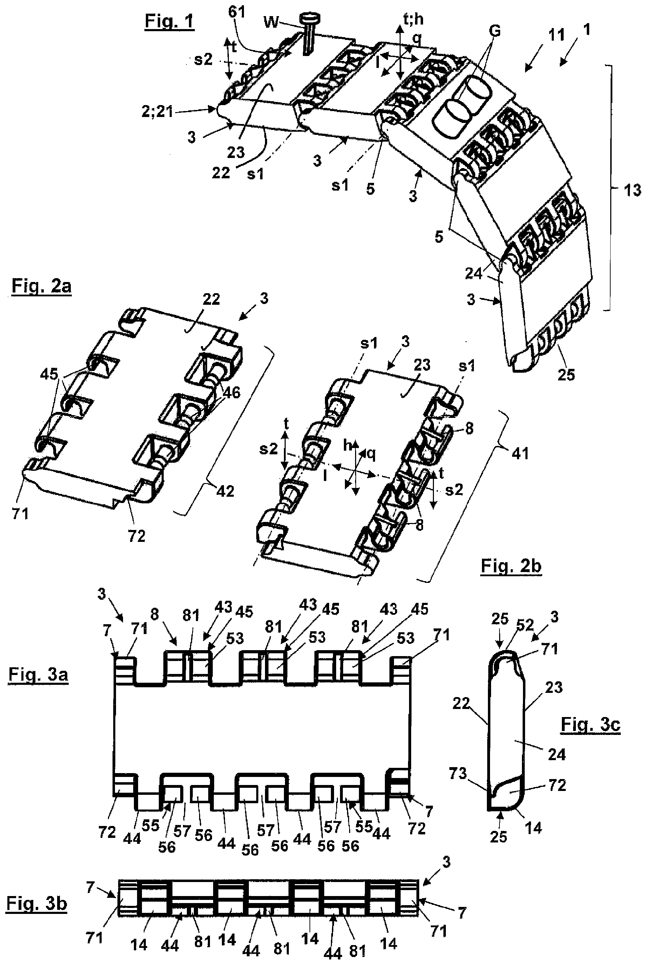

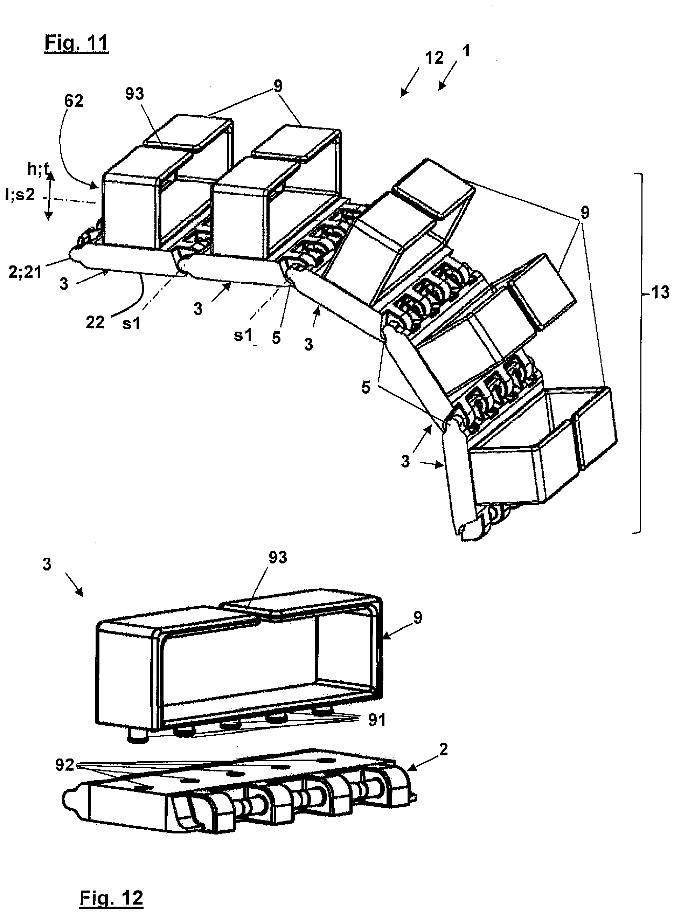

In den Figuren 1 und 11 wird jeweils eine Ausführungsform einer Handhabungskette 1 dargestellt. Die Handhabungskette 1 ist hier bandförmig ausgebildet. Gemäß Figur 1 ist die Handhabungskette 1 als Förderkette 11 zum Transport beispielsweise von Gütern G oder eines Werkzeuges W zur Ausführung eines hier nicht weiter dargestellten Arbeitsvorganges, beispielsweise eines periodischen Bedrucken eines Untergrundes, wie Stoff oder Papier, mittels eines Stempels S als Werkzeug W. Das Werkzeug W ist an der Förderkette festgelegt und kann optional ferngesteuert werden. Auf die Darstellung von möglichen Haltemittel für die Güter ist hier zur klareren Darstellung der Erfindung verzichtet worden.

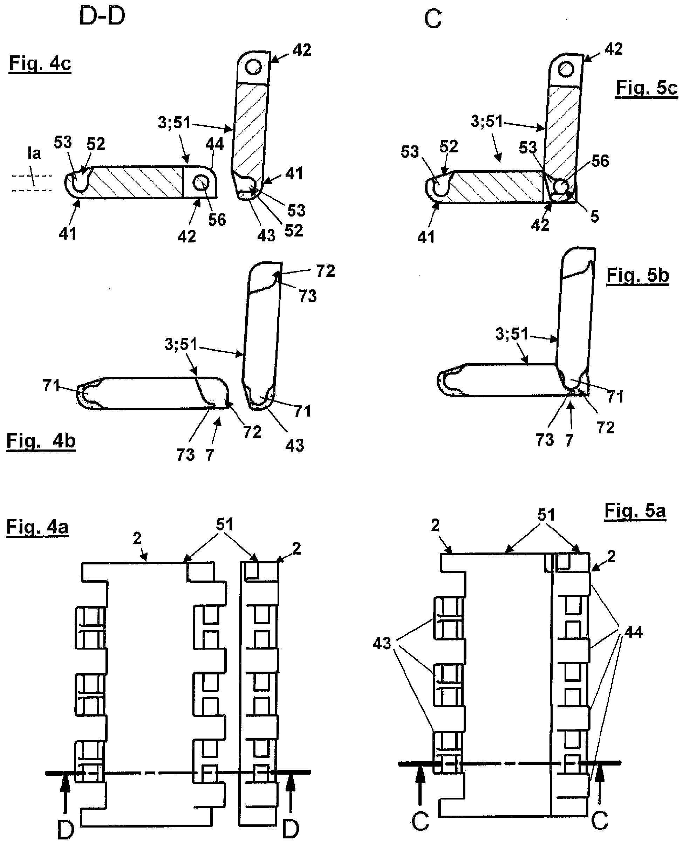

Die Handhabungskette 1 weist in beiden Fällen einen flachen sich in Längsrichtung l erstreckenden Körper 2 auf, der sich aus einer Vielzahl von in Längsrichtung l aneinander angrenzenden hier plattenförmigen Kettengliedern 3 zusammensetzt. Die Kettenglieder 3 sind jeweils in ihren angrenzenden Verbindungsbereichen 41, 42 über eine Scharniergelenkverbindung 5 um eine erste sich in Querrichtung q erstreckende Schwenkachse s1 verschwenkbar miteinander verbunden. Wie in den Figur 5 bis 8 dargestellt, ist ein als erster Verbindungsbereich 41 ausgebildeter Verbindungsbereich so ausgelegt, dass die Scharniergelenkverbindung 5 zusätzlich zu der Verschwenkung einer üblichen Scharniergelenkverbindung um die erste Schwenkachse s1 hier zwei weitere Relativbewegungen der Gelenkpartner 51, d.h. der gelenkig miteinander verbundenen Kettenglieder 3, ermöglicht.

Die erste zusätzliche Relativbewegung der Gelenkpartner 51 erfolgt um eine Verschwenkung der Gelenkpartner 51 um eine zweite Schwenkachse s2, die sich in Längsrichtung l erstreckt. Als zweite zusätzliche Relativbewegung der Gelenkpartner 51 ist hier eine Translation der Gelenkpartner 51 in Translationsrichtung t senkrecht oder etwa senkrecht zu den Schwenkachsen s1, s2 beziehungsweise in Höhenrichtung h vorgesehen. Wie den Figuren entnehmbar, erfolgt die Translation senkrecht zur Längsrichtung l und Querrichtung q des Kettengliedes 3 bzw. der Handhabungskette 1. Somit weist die Scharniergelenkverbindung 5 hier drei Freiheitsgrade, eine Verschwenkung um die erste Schwenkachse s1, eine Verschwenkung um die zweite Schwenkachse s2 und eine Translation in Translationsrichtung t auf. Die Gelenkpartner 51 der Scharniergelenkverbindung 5 sind bezüglich der ersten Schwenkachse s1 axial verschiebungsfest zueinander angeordnet.

Der Körper 2 der Handhabungskette 1 weist in einer hier nicht dargestellten Bereitstellungslage als Grundform ein flaches gestrecktes Band 21 aus gelenkig miteinander verbundenen Kettengliedern 3 auf. Das Band 21 weist senkrecht zur Höhenrichtung h zwei gegenüberliegende größere Seiten, d.h. eine erste Seite 22 und eine zweite Seite 23, auf. Die zweite Seite 23 ist in der ersten Ausführungsform der Handhabungskette 1 als Transportkette 11 Träger für einen Transportraum 61, der jedoch bezüglich der Figur 1 auch seitlich oder unterhalb der Transportkette 11 angeordnet sein kann. In Figur 11 mit der zweiten Ausführungsform der Förderkette als Führungskette, hier als Energieführungskette 12, ist die zweite Seite 23 als Träger für einen Führungsraum 62 für die Energieleitungen vorgesehen. In der in Figuren 1 und 11 gezeigten Einsatzposition ist das Band 51 zur Ausbildung des Transportbandes 11 unter Verbindung seiner Enden zu einem Endlosband zusammengefügt, während das Band 51 zur Ausbildung der Energieführungskette endseitig jeweils an einem hier nicht dargestellten Anschlusspunkt festgelegt ist, wobei die Anschlusspunkte relativ zueinander verfahrbar sind.

Die Kettenglieder 3 weisen jeweils gleich dem Band 21 einen Körper 2 mit einer ersten Seite 22 und zweiten Seite 23 auf, wobei die beiden Seiten 22, 23 durch zur Längsrichtung l parallele Schmalseiten 24 und zur Längsrichtung l senkrechte Schmalseiten 25 miteinander verbunden sind. Hierbei sind die Verbindungsbereiche 4 der Kettenglieder 3 jeweils an den senkrechten Schmalseiten 25 angeordnet, an denen die Gelenkpartner 51 in der Scharniergelenkverbindung 5 verbunden sind. Die Kettenglieder 3 weisen jeweils einen ersten Verbindungsbereich 41 und einen in Längsrichtung von dem ersten Verbindungsbereich 41 beabstandeten zweiten Verbindungsbereich 42 auf, wobei zur Ausbildung der Scharnierverbindung 5 der erste Verbindungsbereich 41 des einen Gelenkpartners 51 mit dem zweiten Verbindungsbereich 42 des anderen Gelenkpartners 51 verbunden wird.

In dem ersten Verbindungsbereich 41 sind erste Vorsprünge 43 mit ersten Verbindungsmitteln 45 und in dem zweiten Verbindungsbereich 42 zweite Vorsprünge 44 mit zweiten Verbindungsmitteln 46 vorgesehen, wobei sich die Vorsprünge 43, 44 jeweils in Längsrichtung l weg und zwar von einander weg erstrecken. Die Vorsprünge 43, 44 der Gelenkpartner 51 greifen in alternierender Reihenfolge zahnartig ineinander. Es sind in den hier gezeigten Ausführungsformen der Kettenglieder 3 drei erste Vorsprünge 43 und vier zweite Vorsprünge 44 vorgesehen, wobei ein erster Vorsprung 43 jeweils von zwei zweiten Vorsprüngen 44 flankiert wird und bezüglich der ersten Schwenkachse s1 axial verschiebungsfest an denselben anliegt.

An den ersten Vorsprüngen 43 ist jeweils als erstes Verbindungsmittel 45 eine Kulissenführung 52 vorgesehen, die für eine rein lineare Translation der beiden Gelenkpartner 51 relativ zueinander ausgelegt ist. Die Kulissenführung 52 bildet eine erste Scharnieröffnung 53 aus, wobei sich die erste Scharnieröffnung 53 axial in Richtung der ihr zugeordneten ersten Schwenkachse s1 erstreckt. Die Kulissenführung 52 weist ein Langlochprofil auf, das sich um eine Länge l in Höhenrichtung h erstreckt. Dieses Langlochprofil ist in den hier gezeigten Ausführungsformen des Kettengliedes 3 in Richtung der Flächennormalen der zweiten Seite 23 unter Ausbildung eines C-Profils geöffnet ausgebildet, wobei die Schenkel des C-Profils parallel und in Höhenrichtung h verlaufen. Seitlich zwischen den zweiten Vorsprüngen 44 sind als zweite Verbindungsmittel 46 Bolzen 55 vorgesehen, die zur Ausbildung der Scharniergelenkverbindung 5 in die erste Scharnieröffnung 53 des Gelenkpartners 51 eingreifen. Der Bolzen 51 ist in einer Neutralposition, in der die Seiten 22, 23 der Gelenkpartner 51 zueinander fluchten, in halber Höhe der Länge l des Langlochprofils in der ersten Scharnieröffnung 53 angeordnet.

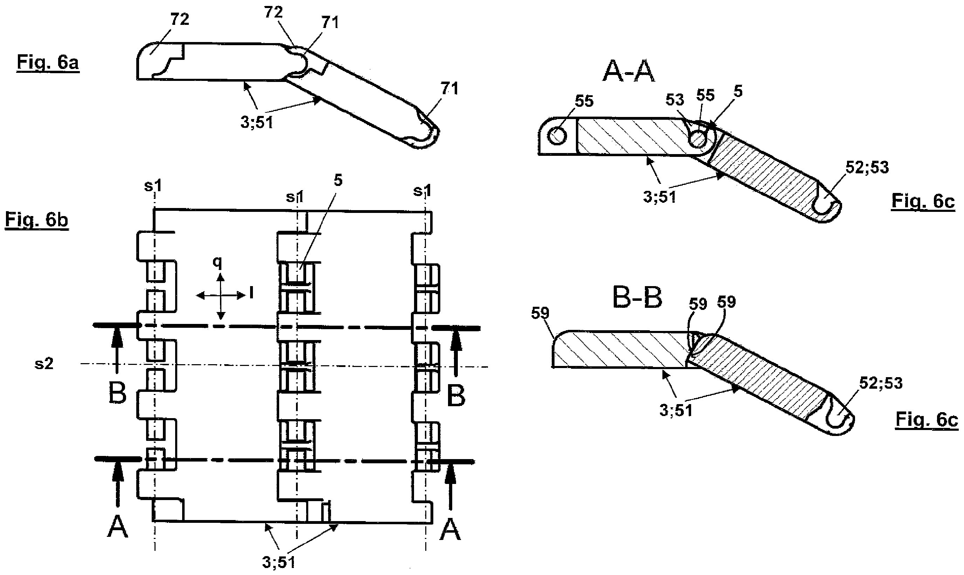

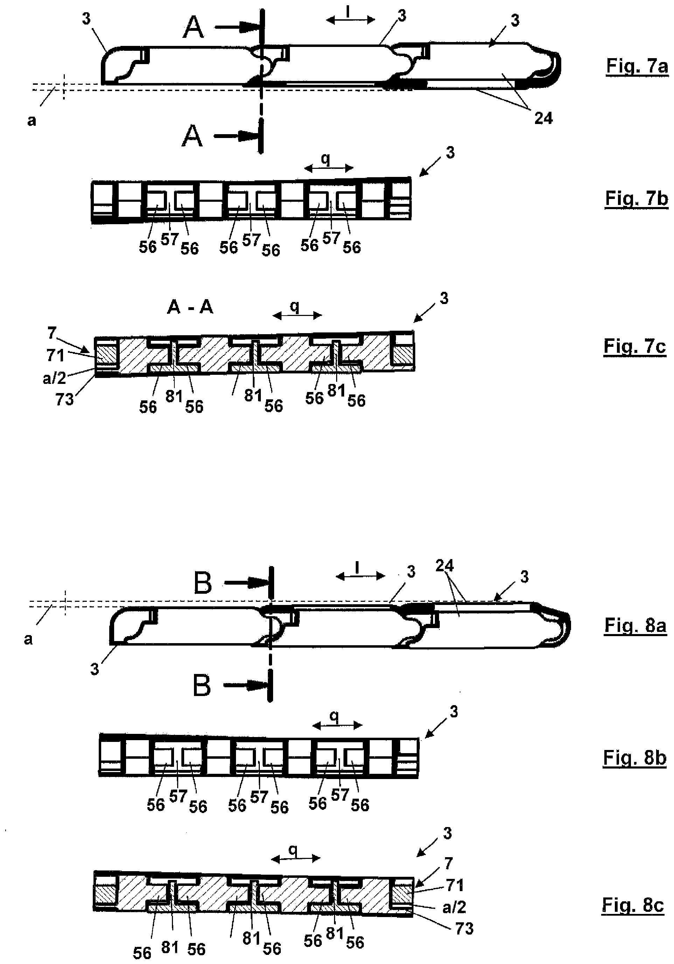

Die entsprechende Montage zur Verbindung zweier Gelenkpartner 51 ist in den Figuren 4 bis 6 in drei Schritten dargestellt. Da die erste Scharnieröffnung 53 in Höhenrichtung h des jeweiligen Gelenkpartners 51 geöffnet ist, werden die Gelenkpartner 51 in einer Fügeposition (Figur 4), in der die Gelenkpartner 51 in einem Winkel von um 90° angestellt sind, unter seitlichem Eingriff des Bolzens 55 in das C-Profil der ersten Scharnieröffnung 53 übereinander geschoben und in Eingriff gebracht (Figur 5). Zum leichteren Eingriff des Bolzens 55 in die erste Scharnieröffnung 53 zum Öffnungsrand hin trichterartig erweitert ausgebildet (Figuren 4c und 15c. Anschließend werden die Gelenkpartner 51 aus der Fügeposition in eine Arbeitsposition hinein verschwenkt, in der die Gelenkpartner 51 in einen Winkel deutlich größer als 90°, hier gemäß Figur 8 in einen Winkel etwas größer als 180°, angestellt sind. Diese Position entspricht etwa einer anschlagsbegrenzten Biegeposition der Handhabungskette 1 in ihrem Bogen 13. Hierzu sind endseitig in den Verbindungsbereichen 41, 42 Anschläge 14 (Figur 6c) vorgesehen, die mit Verschwenkung der Gelenkpartner 51 um die erste Schwenkachse s1 gegeneinander geführt werden.

Um zu verhindern, dass sich die Gelenkpartner 51 in der Arbeitsposition wieder voneinander lösen, ist eine Blockiervorrichtung 7 vorgesehen, die insbesondere bei der Energieführungskette 12 in zweifacher Ausführungsform zum Einsatz kommt. In beiden Ausführungsformen der Handhabungskette 1 ist eine erste Ausführungsform der Blockiervorrichtung 7 vorgesehen, wobei diese in dem ersten Verbindungsbereich 41 einen Blockiervorsprung 71 aufweist, der in eine in dem zweiten Verbindungsbereich 42 vorgesehene Blockieröffnung 72 eingreift. Die Blockieröffnung 72 ist zu der zweiten Seite 23 hin seitlich geöffnet ausgebildet, so dass der Blockvorsprung 71 mit der Montage der Gelenkpartner 51 ungehindert in die Blockeröffnung 72 hineingleiten kann (Figur 6c). Die Blockeröffnung 72 weist jedoch in Richtung von der zweiten Seite 23 zu der ersten Seite 22 hin eine seitliche Wandung 73 auf, die einer Bewegung des Kettengliedes 3 mit dem Blockvorsprung 71 in dieser Richtung entgegensteht und somit als Anschlag gegen ein axiales Verschieben des Gelenkpartners 51 mit der ersten Scharnieröffnung 53 in Richtung der Flächennormalen der ersten Seite 22 dient. Damit können die beiden Gelenkpartner 51 in der Arbeitsposition zwar über eine bestimmte Höhe, hier über die Länge la des C-Profils, aber nicht darüber hinaus hin und her bewegt werden. Somit können die Gelenkpartner 51 in Translationsrichtung t relativ zueinander verschoben werden. Diese Ausbildungsform der Blockiervorrichtung 7 mit Blockiervorsprung 71 und Blockieröffnung 72 ist hier zweifach und zwar bezüglich der Querrichtung q jeweils endseitig an den parallelen Schmalseiten 24 vorgesehen.

Um einer möglichen bezüglich der ersten Schwenkachse s1 radialen Aufweitung des C-Profils unter der Belastung in der Handhabungskette 1 entgegenzuwirken, ist eine Verstärkung 8 vorgesehen, die hier in Form einer zur ersten Schwenkachse s senkrecht angeordneten Verstärkungswand 81 ausgebildet ist. Die Verstärkungswand 81 verläuft hier über den gesamten Querschnitt des C-Profils und ist mit demselben verbunden. Damit wird die erste Scharnieröffnung 53 in hier zwei gleiche Abschnitte geteilt. Die Anordnung der Verstärkungswand 81 erfordert eine Teilung des Bolzens 55 in dem zweiten Verbindungsbereich 42 in zwei Bolzenabschnitte 56. Diese beiden Bolzenabschnitte 56 erstrecken sich jeweils mit einem freien Ende bezüglich der ersten Schwenkachse s1 unter Begrenzung eines Zwischenraumes 57 axial aufeinander zu, wobei die Verstärkungswand 81 mit Eingriff des Bolzens 55 in die erste Scharnieröffnung 53 in diesen Zwischenraum 57 eingreift. Der Zwischenraum 57 weist eine zur ersten Schwenkachse s1 axiale Stärke auf, die gleich der der Verstärkungswand 81 ist.

In den Figuren 7 bis 10 und hier insbesondere in den Querschnittsdarstellungen der Figuren 7c bis 10c werden vier mögliche entsprechend den gewählten Abmessungen der Gelenkpartner maximale Relativpositionen der durch die Scharniergelenkverbindung 5 verbundenen Gelenkpartner 51 und zwar am Beispiel mit drei miteinander verbundenen Kettengliedern 3 dargestellt, wobei sich die Relativposition auf eine Nullposition beziehen, in der die Gelenkpartner bezüglich der zweiten Schwenkachse unverschwenkt und bezüglich der Translation unbewegt sind. Aus den Darstellungen ist ersichtlich, dass die maximalen Relativpositionen jeweils im Wesentlichen von der Länge la des Langlochprofils der ersten Scharnieröffnungen abhängen bzw. über diese Länge la eingestellt werden können.

Gemäß Figur 7 ist eine erste Relativposition der Gelenkpartner 51 gezeigt, die sich durch reine Verschwenkung um die zweite Schwenkachse s2 und zwar, bei festgehaltene linkem Kettenglied, bei Verschwenkung des rechten Kettengliedes 3 gegen Uhrzeigersinn um einen Betrag a ergibt. Dies bedeutet, dass bei baulich gleichen Kettengliedern 3 die maximale Verschwenkung zweier Gelenkpartner 51 einen Betrag von a/2 aufweist. Die Verschwenkung an sich um die zweite Schwenkachse s2 ist in Figur 7c deutlich an der Änderung der relativen Lage der Verstärkungswände 81 zu dem jeweils zugeordneten Bolzen 55 erkennbar, wobei sich die Verstärkungswände 81 in einer Abfolge von links nach rechts von links in dem Zwischenraum 57 schrittweise absenken. Gemäß Figur 8 mit einer zweiten Relativposition erfolgte die Verschwenkung um die zweite Schwenkachse s2 im Uhrzeigersinn mit gleichen Beträgen a wie in Figur 7.

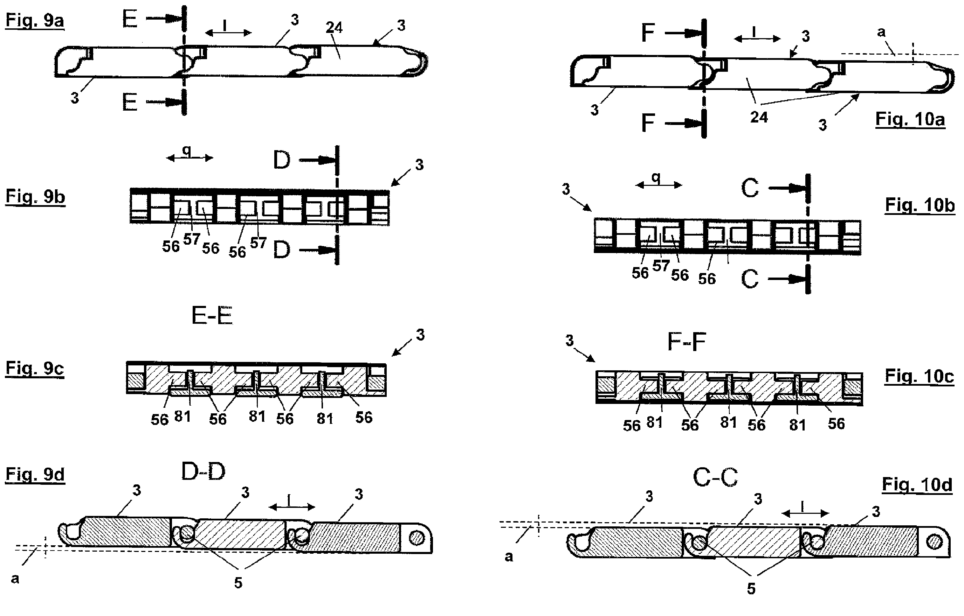

Gemäß Figur 9 ist die dritte Relativposition dargestellt, die durch Translation in Translationsrichtung t herstellt ist, wobei, bei festgehaltenem linkem Kettenglied, die Translation unter stufenweiser Anhebung der hierzu rechten Kettenglieder 3 um den Betrag a/2, also insgesamt um den Betrag a erfolgt. Deutlich erkennbar ist die Anhebung in Figur 9d. Wegen der reinen Translationsbewegung werden die Verstärkungswände 81 eine Kettengliedes 3 relativ zu den zugeordneten Bolzen 55 gleich bewegt. Gemäß Figur 10 mit der vierten Relativposition ist diese, bei festgehaltenem linkem Kettenglieder 3, durch Translation unter Absenkung der hierzu rechten Kettenglieder 3 mit gleichen Beträgen a wie in Figur 7 hergestellt worden.

Wie Figur 11 mit der Darstellung der Energieführungskette 12 entnehmbar, ist an der zweiten Seite 23 hier eines jeden Kettengliedes 3 bügelförmige den Führungsraum 62 begrenzende Haltemittel 9 vorgesehen, die nach Montage der Gelenkpartner 51 auf dieselben hier in Form einer Steckverbindung festgelegt werden können. Hierzu sind unterseitig der Haltemittel 9 Steckvorsprünge 91 vorgesehen, die zur Ausbildung der Steckverbindung jeweils in zugeordnete an der zweiten Seite vorgesehene Stecköffnungen 92 eingreifen (Figur 12). Diese Haltemittel 9 bilden zugleich eine zweite Ausführungsform der Blockiervorrichtung 7: Werden die in der Scharniergelenkverbindung 5 verbundenen Gelenkpartner 51 aus der Arbeitsposition um die erste Schwenkachse s1 zurück in Richtung der Fügeposition, d.h. gemäß Figur 11 gegen die Biegung des Bogens 13 verschwenkt, so werden die an der zweiten Seite 23 angeordneten Haltemittel 9 zueinander verschwenkt und stoßen mit Erreichen eines bestimmten Verschwenkwinkels seitlich aneinander. Somit kann über die Dimensionierung der Haltemittel 9 und darüber, ob jedes Kettenglied 3 oder nur jedes x-te, wie zweite oder dritte Kettenglied 3 mit den Haltemitteln 9 versehen ist, ein bestimmter Verschwenkwinkel eingestellt werden, indem die Haltemittel 9 seitlich gegeneinander anschlagen und somit ein weiter gehende Verschwenkung blockieren. Dank dieser Maßnahme kann eine derart aufgebaute Handhabungskette 1 vollständig vormontiert gelagert werden, ohne dass die Gefahr besteht, dass sich die Kettenglieder 3 wieder unbeabsichtigt lösen.

Wie Figuren 2b und 12 entnehmbar, sind die Körper 2 der beiden Ausführungsformen der Handhabungskette 1 bis auf die vorgesehenen Stecköffnungen 92 der Energieführungskette 12 gleich, wobei diese auch bei der Transportkette 11 vorgesehen können. Zudem ist an der der dem Körper 2 abgewandten Seite der Haltemittel ein Längsschlitz zum Einlegen von Energieleitungen vorgesehen. Gleiche Haltemittel können auch zur Begrenzung des Transportraumes der Förderkette vorgesehen sein, beispielsweise um das Transportgut geschützt und eventuell auch unter Klemmung durch die Haltemittel 9 anzuordnen.

Nicht dargestellt, aber im Umfang der Erfindung enthalten, ist eine Ausführungsform der Handhabungskette, gemäß der die erste Scharnieröffnung ein geschlossenes Langlochprofil aufweist und die zweiten Verbindungsmittel als zweite Scharnieröffnung mit vorzugsweise kreisrundem Öffnungsprofil ausgeführt sind. Zur Ausbildung der Scharnierverbindung zwischen zwei Gelenkpartner werden die Scharnieröffnungen der Gelenkpartner fluchtend zueinander angeordnet und von einem Scharnierbolzen durchgriffen in einer Verbindungsposition gehalten. Diese Ausführungsform ist gegenüber der zuvor erläuterten Ausführungsform der Handhabungskette 1 zwar baulich einfacher ausgestaltet, benötigt jedoch zur Ausbildung der Scharniergelenkverbindung den Scharnierbolzen 58, der zusätzlich montiert werden muss.

### Kettenglied und Handhabungskette mit Kettenglied

### Bezugszeichenliste

- 1: Handhabungskette
- 11: Transportkette
- 12: Energieführungskette
- 13: Bogen
- 2: Körper
- 21: Band
- 22: erste Seite
- 23: zweite Seite
- 24: parallele Schmalseite
- 25: senkrechte Schmalseite
- 3: Kettenglied
- 4: Verbindungsbereich
- 41: erster Verbindungsbereich
- 42: zweiter Verbindungsbereich
- 43: erster Vorsprung
- 44: zweiter Vorsprung
- 45: erstes Verbindungsmittel
- 46: zweites Verbindungsmittel
- 5: Scharniergelenkverbindung
- 51: Gelenkpartner
- 52: Kulissenführung
- 53: erste Scharnieröffnung
- 54: zweite Scharnieröffnung
- 55: Bolzen
- 56: Bolzenabschnitte
- 57: Zwischenraum
- 58: Scharnierbolzen
- 59: Anschlag
- 61: Transportraum
- 62: Führungsraum
- 7: Blokiervorrichtung
- 71: Blockiervorsprung
- 72: Blockieröffnung
- 73: Wandung
- 8: Verstärkung
- 81: Verstärkungswand
- 9: Haltemittel
- 91: Steckvorsprung
- 92: Stecköffnung
- 93: Schlitz
- a: Betrag
- l: Längsrichtung
- la: Länge
- h: Höhenrichtung
- q: Querrichtung
- s1: erste Schwenkachse
- s2: zweite Schwenkachse
- t: Translationsrichtung
- G: Gut
- S: Stempel
- W: Werkzeug

## Patentansprüche

1. Kettenglied für eine Handhabungskette, wobei die Handhabungskette (1) eine Vielzahl von in Längsrichtung (l) der Handhabungskette (1) aneinander angrenzenden Kettengliedern (3) aufweist, die in ihren angrenzenden ersten und zweiten Verbindungsbereichen (41, 42) jeweils um eine sich in Querrichtung (q) erstreckende erste Schwenkachse (s1) verschwenkbar miteinander verbunden sind, wobei
das Kettenglied (3) zur Ausbildung einer als Scharniergelenkverbindung (5) ausgelegten Schwenkverbindung mit dem jeweils angrenzenden Kettenglied (3) ausgelegt ist und einen plattenartigen Körper (2) mit einer ersten Seite (22), einer zweiten Seite (23) und zwei in Längsrichtung (l) der Handhabungskette weisenden Schmalseiten (25) und zwei in Querrichtung (q) zur Längsrichtung (l) der Handhabungskette weisenden Schmalseiten (24) aufweist, die die erste Seite (22) und die zweite Seite (23) mit einander verbinden,
der erste Verbindungsbereich (41) an einer der in Längsrichtung (l) weisenden Schmalseiten (25) und der zweite Verbindungsbereich (42) an der anderen in Längsrichtung (l) weisenden Schmalseiten (25) angeordnet sind, wobei
der erste Verbindungsbereich (41) so ausgebildet ist, dass bei Verbindung des Kettenglieds (3) mit einem jeweils benachbarten Kettenglied (3) die Scharniergelenkverbindung (5) zusätzlich zu der Verschwenkung um die erste Schwenkachse (s1) mindestens eine weitere Relativbewegung der Kettenglieder (3) ermöglicht, und
der erste Verbindungsbereich (41) des Kettenglieds (3) als erstes Verbindungsmittel (45) mindestens eine zur ersten Schwenkachse (s1) axiale Scharnieröffnung (53) mit einem Langlochprofil aufweist,
der zweite Verbindungsbereich (42) des Kettenglieds (3) als zweites Verbindungsmittel (46) mindestens einen Bolzen (55) aufweist, der axial zur ersten Schwenkachse (s1) liegt, wobei der mindestens eine Bolzen (55) in eine Scharnieröffnung (53) des ersten Verbindungsbereichs (41) eines benachbarten Kettenglieds (3) eingreifbar ist, so dass zur Verbindung zweier benachbarter Kettenglieder (3) die ersten und zweiten Verbindungsmittel (45, 46) der zugeordneten Verbindungsbereiche (41, 42) der beiden Kettenglieder (3) in einer Fügeposition, in der die Kettenglieder (3) in einem Winkel um 90° anstellbar sind, unter Eingriff des Bolzens (55) des einen Kettenglieds (3) in das Langlochprofil der Scharnieröffnung (53) des anderen Kettenglieds (3) übereinander bringbar und in Eingriff bringbar sind, wobei die beiden benachbarten Kettenglieder (3) an den Verbindungsmitteln (45, 46) aus der Fügeposition in eine Arbeitsposition hinein verschwenkbar sind, in der die beiden benachbarten Kettenglieder (3) in einem Winkel um 180° anstellbar sind,
und wobei das Kettenglied eine Blockiervorrichtung (7) aufweist, mit der benachbarte Kettenglieder (3) gegen eine Loslösung der Verbindung in der Arbeitsposition sicherbar sind,
**dadurch gekennzeichnet, dass** das Langlochprofil der mindestens einen zur ersten Schwenkachse (s1) axialen Scharnieröffnung (53) sich in Höhenrichtung (h) senkrecht zur Längsrichtung (1) und zur Querrichtung (q) erstreckt und als ein sich in Höhenrichtung (h) zur zweiten Seite (23) hin öffnendes C-Profil ausgebildet ist und der mindestens eine Bolzen (55) einen kreisförmigen Querschnitt aufweist.

2. Kettenglied nach Anspruch 1, **dadurch gekennzeichnet, dass** die erste Scharnieröffnung (53) mit dem sich öffnenden C-Profil zu ihrer Stabilisierung gegen eine zur ersten Schwenkachse (s1) radiale Aufweitung eine Verstärkung (9), insbesondere eine zur ersten Schwenkachse (s1) senkrecht angeordnete Verstärkungswand (91) aufweist.

3. Kettenglied nach Anspruch 1 oder 2, **dadurch gekennzeichnet, dass**, sich jeweils in Längsrichtung (l) weg erstreckend, in dem ersten Verbindungsbereich (41) zumindest ein erster Vorsprung (43) mit dem ersten Verbindungsmittel (45) und in dem zweiten Verbindungsbereich (42) zumindest ein zweiter Vorsprung (44) mit zweiten Verbindungsmitteln (46) angeordnet sind.

4. Kettenglied nach Anspruch 3, **dadurch gekennzeichnet, dass** in dem ersten Verbindungsbereich (41) mindestens zwei als erste Vorsprünge (43) ausgebildete Vorsprünge und in dem zweiten Verbindungsbereich (42) mindestens drei als zweite Vorsprünge (44) ausgebildete Vorsprünge vorgesehen sind, wobei die Vorsprünge (43,44) bezüglich der ersten Schwenkachse (s1) axial aneinander anschließend und in alternierender Reihenfolge angeordnet sind.

5. Kettenglied nach einem der Ansprüche 1 bis 4,
**dadurch gekennzeichnet, dass** es für eine erste zusätzliche Relativbewegung zweier benachbarter Kettenglieder (3) in Form einer Verschwenkung der Kettenglieder (3) um eine sich in Längsrichtung (l) erstreckende zweite Schwenkachse (s2) und/oder für eine zweite zusätzliche Relativbewegung der Kettenglieder (3) in Form einer Translation der Kettenglieder (3) senkrecht oder etwa senkrecht zur Längsrichtung (l) und Querrichtung (q) der Kettenglieder (3) ausgelegt ist.

6. Kettenglied nach einem der Ansprüche 1-5, **dadurch gekennzeichnet, dass** die Blockiervorrichtung (7) mit jeweils einem endseitig an den in Querrichtung (q) weisenden Schmalseiten (24) und dem ersten Verbindungsbereich (41) des Kettenglieds (3) angeordneten Blockiervorsprung (71) und einer jeweils endseitig an den in Querrichtung (q) weisenden Schmalseiten (24) und im zweiten Verbindungsbereich (42) des Kettenglieds (3) angeordneten Blockieröffnung (72) versehen ist, die zur zweiten Seite (23) des Kettenglieds (3) hin seitlich geöffnet ausgebildet ist, so dass ein im ersten Verbindungsbereich (41) eines benachbarten Kettenglieds (3) angeordneter Blockiervorsprung (71) in die Blockieröffnung (72) hineingleitbar ist, und die Blockieröffnung (72) in Richtung von der zweiten Seite (23) zur ersten Seite (22) hin eine seitliche Wandung (73) aufweist, die als Anschlag der Bewegung eines benachbarten Kettenglieds (3) mit seinem Blockiervorsprung (71) in Richtung der Flächennormalen der ersten Seite (22) entgegensteht.

7. Handhabungskette mit einem Körper (3) aus einer Vielzahl von in Längsrichtung (l) der Handhabungskette (1) aneinander angrenzenden Kettengliedern (3) gemäß einem der Ansprüche 1 bis 6, wobei die Kettenglieder (3) in ihren angrenzenden Verbindungsbereichen (41, 42) um eine sich in Querrichtung (q) erstreckende erste Schwenkachse (s1) verschwenkbar miteinander verbunden sind, zur Ausbildung einer Scharniergelenkverbindung (5) mit dem jeweiligen Gelenkpartner (51) ausgelegt ist und jeweils zumindest einen als erster Verbindungsbereich (41) ausgebildeten Verbindungsbereich aufweisen, der so ausgebildet ist, dass die Scharniergelenkverbindung (5) zusätzlich zu der Verschwenkung um die erste Schwenkachse (s1) mindestens eine weitere Relativbewegung der Gelenkpartner (51) ermöglicht.

8. Handhabungskette nach Anspruch 7, **dadurch gekennzeichnet, dass** die Verbindungsmittel (45, 46) jeweils in oder an einem Vorsprung (43, 44) angeordnet sind, der sich in Längsrichtung (l) von dem jeweiligen Verbindungsbereich (41, 42) weg erstreckt, wobei die Vorsprünge (45, 46) zweier Gelenkpartner (51) zahnartig ineinander greifend und seitlich vorzugsweise mit Spiel aneinander anliegend angeordnet sind.

9. Handhabungskette nach Anspruch 7 oder 8, **dadurch gekennzeichnet, dass** sie eine Förderkette (11) zum Transport beispielsweise von Gütern (G) oder eines Werkzeuges (W) zur Ausführung eines Arbeitsvorganges oder dass sie eine Führungskette (12) zur Aufnahme und Führung von Versorgungsleitungen zwischen zwei relativ zueinander beweglichen Anschlusspunkten ist.

## Claims

1. A chain link for a handling chain, wherein the handling chain (1) has a plurality of chain links (3) which adjoin each other in the longitudinal direction (I) of the handling chain (1) and which in their adjoining first and second connecting regions (41, 42) are connected together pivotably about a respective first pivot axis (s1) which extends in the transverse direction (q), wherein the chain link (3) is adapted to form a pivotal connection in the form of a hinge joint connection (5) with the respectively adjoining chain link (3) and has a plate-like body (2) having a first side (22), a second side (23) and two narrow sides (25) which face in the longitudinal direction (I) of the handling chain and two narrow sides (24) which face in the transverse direction (q) relative to the longitudinal direction (I) of the handling chain and which connect the first side (22) and the second side (23) together,
the first connecting region (41) is arranged at one of the narrow sides (25) facing in the longitudinal direction (I) and the second connecting region (42) is arranged at the other narrow side (25) facing in the longitudinal direction (I), wherein
the first connecting region (41) is so adapted that when the chain link (3) is connected to a respective adjacent chain link (3) in addition to the pivotal movement about the first pivot axis (s1) the hinge joint connection (5) permits at least one further relative movement of the chain links (3),
the first connecting region (41) of the chain link (3) as a first connecting means (45) has at least one hinge opening (53) which is axial with respect to the first pivot axis (s1), with a slot profile,
the second connecting region (42) of the chain link (3) as a second connecting means (46) has at least one pin (55) arranged axially with respect to the first pivot axis (s1), wherein the at least one pin (55) is engageable into a hinge opening (53) of the first connecting region (41) of an adjacent chain link (3) so that for connecting two adjacent chain links (3) the first and second connecting means (45, 46) of the associated connecting regions (41, 42) of the two chain links (3) can be brought into mutually superposed relationship and can be brought into engagement in a joining position in which the chain links (3) can be set at an angle through 90° with engagement of the pin (55) of the one chain link (3) into the slot profile of the hinge opening (53) of the other chain link (3), wherein the two adjacent chain links (3) at the connecting means (45, 46) are pivotable out of the joining position into a working position in which the two adjacent chain links (3) can be set at an angle through 180°,
and wherein the chain link has a blocking device (7) with which adjacent chain links (3) can be secured to prevent detachment of the connection in the working position,
**characterised in that** the slot profile of the at least one hinge opening (53) which is axial relative to the first pivot axis (s1) extends in the heightwise direction (h) perpendicularly to the longitudinal direction (I) and to the transverse direction (q) and is in the form of a C-profile which opens in the heightwise direction (h) towards the second side (23) and the at least one pin (55) is of a circular cross-section.

2. A chain link according to claim 1 **characterised in that** the first hinge opening (53) with the opening C-shaped profile for stabilization thereof in relation to an enlargement which is radial with respect to the first pivot axis (s1) has a reinforcement means (9), in particular a reinforcement wall (91) arranged perpendicularly relative to the first pivot axis (s1).

3. A chain link according to claim 1 or claim 2 **characterised in that** extending away in the longitudinal direction arranged in the first connecting region (41) is at least one first projection (43) with the first connecting means (45) and arranged in the second connecting region (42) is at least one second projection (44) with second connecting means (46).

4. A chain link according to claim 3 **characterised in that** provided in the first connecting region (41) are at least two projections in the form of first projections (43) and provided in the second connecting region (42) are at least three projections in the form of second projections (44), wherein the projections (43, 44) are arranged in mutually axially adjoining relationship and in an alternate sequence with respect to the first pivot axis (s).

5. A chain link according to one of claims 1 to 4 **characterised in that** it is designed for a first additional relative movement of two adjacent chain links (3) in the form of a pivotal movement of the chain links (3) about a second pivot axis (s2) extending in the longitudinal direction (I) and/or for a second additional relative movement of the chain links (3) in the form of a translation of the chain links (3) perpendicularly or approximately perpendicularly to the longitudinal direction (I) and transverse direction (q) of the chain links (3).

6. A chain link according to one of claims 1 to 5 **characterised in that** the blocking device (7) is provided with a respective blocking projection (71) arranged at the end at the narrow sides (24) facing in the transverse direction (q) and in the first connecting region (41) of the chain link (3) and a respective blocking opening (72) arranged at the end at the narrow sides (24) facing in the transverse direction (q) and in the second connecting region (42) of the chain link (3), and being of a laterally open configuration towards the second side (23) of the chain link (3) so that a blocking projection (71) arranged in the first connecting region (41) of an adjacent chain link (3) can be slid into the blocking opening (72) and the blocking opening (72) in the direction from the second side (23) towards the first side (22) has a lateral wall (73) which as an abutment opposes the movement of an adjacent chain link (3) with its blocking projection (71) in the direction of the surface normal of the first side (22).

7. A handling chain comprising a body (2) composed of a plurality of chain links (3) adjoining each other in the longitudinal direction (I) of the handling chain (1), according to one of claims 1 to 6, wherein the chain links (3) in their adjoining connecting regions (41, 42) are connected together pivotably about a respective first pivot axis (s1) which extends in the transverse direction (q), to form a hinge joint connection (5) with the respective joint partner and each have at least one connecting region which is in the form of a first connecting region (41) and which is so adapted that in addition to the pivotal movement about the first pivot axis (s1) the hinge joint connection (5) permits at least one further relative movement of the joint partners (51).

8. A handling chain according to claim 7 **characterised in that** the connecting means (45, 46) are respectively arranged in or at a projection (43, 44) which extends in the longitudinal direction (I) away from the respective connecting region (41, 42), wherein the projections (45, 46) of two joint partners (51) are arranged to engage tooth-like into each other and are arranged to bear against each other laterally preferably with play.

9. A handling chain according to claim 7 or claim 8 **characterised in that** it is a conveyor chain (11) for transporting for example items (G) or a tool (W) for carrying out a working operation or it is a guide chain (12) for receiving and guiding supply lines between two connection points which are moveable relative to each other.

## Revendications

1. Maillon de chaîne pour une chaîne de manutention, la chaîne de manipulation (1) présentant une pluralité de maillons de chaîne (3) adjacents les uns aux autres dans la direction longitudinale (1) de la chaîne de manutention (1), qui sont reliés les uns aux autres dans leurs premières et deuxièmes zones de liaison (41, 42) adjacentes, respectivement de manière à pouvoir pivoter autour d'un premier axe de pivotement (s1) s'étendant dans la direction transversale (q), où
le maillon de chaîne (3) est conçu pour former une liaison pivotante conçue comme une liaison articulée à charnière (5) avec le maillon de chaîne (3) respectivement adjacent et présente un corps (2) en forme de plaque avec un premier côté (22), un deuxième côté (23) et deux côtés étroits (25) orientés dans la direction longitudinale (1) de la chaîne de manutention et deux petits côtés (24) orientés dans la direction transversale (q) vers la direction longitudinale (1), qui relient le premier côté (22) et le deuxième côté (23) entre eux,
la première zone de liaison (41) est disposée sur l'un des côtés étroits (25) orientés dans la direction longitudinale (1) et la deuxième zone de liaison (42) est disposée sur l'autre des côtés étroits (25) orientés dans la direction longitudinale (1), où
la première zone de liaison (41) est conçue de telle sorte que, lors de la liaison du maillon de chaîne (3) avec un maillon de chaîne (3) respectivement voisin, la liaison articulée à charnière (5) permet, en plus du pivotement autour du premier axe de pivotement (s1), au moins un autre mouvement relatif des maillons de chaîne (3), et
la première zone de liaison (41) du maillon de chaîne (3) présente, comme premier moyen de liaison (45), au moins une ouverture de charnière (53) axiale par rapport au premier axe de pivotement (s1) avec un profil de trou oblong,
la deuxième zone de liaison (42) du maillon de chaîne (3) présente, en tant que deuxième moyen de liaison (46), au moins un boulon (55) qui est situé axialement par rapport au premier axe de pivotement (s1), ledit au moins un boulon (55) pouvant être engagé dans une ouverture de charnière (53) de la première zone de liaison (41) d'un maillon de chaîne (3) voisin, de sorte que, pour la liaison de deux maillons de chaîne (3) voisins, les premier et deuxième moyens de liaison (45, 46) des zones de liaison (41, 42) associées des deux maillons de chaîne (3) sont dans une position d'assemblage, dans laquelle les maillons de chaîne (3) peuvent être inclinés selon un angle de 90°, peuvent être amenés l'un au-dessus de l'autre et mis en prise en engageant le boulon (55) d'un maillon de chaîne (3) dans le profil de trou oblong de l'ouverture de charnière (53) de l'autre maillon de chaîne (3), les deux maillons de chaîne (3) voisins pouvant pivoter sur les moyens de liaison (45, 46) de la position d'assemblage dans une position de travail dans laquelle les deux maillons de chaîne (3) voisins peuvent être inclinés selon un angle de 180°,
et le maillon de chaîne présentant un dispositif de blocage (7) avec lequel des maillons de chaîne (3) voisins peuvent être bloqués contre un détachement de la liaison dans la position de travail,
**caractérisé en ce que**
le profil de trou oblong de l'au moins une ouverture de charnière (53) axiale par rapport au premier axe de pivotement (s1) s'étend dans la direction de la hauteur (h) perpendiculairement à la direction longitudinale (1) et à la direction transversale (q) et est réalisé sous la forme d'un profil en C s'ouvrant vers le deuxième côté dans la direction de la hauteur (h) et l'au moins un boulon (55) présente une section transversale circulaire.

2. Maillon de chaîne selon la revendication 1, **caractérisé en ce que**, la première ouverture de charnière (53) avec le profilé en C s'ouvrant présente, pour sa stabilisation contre un élargissement radial par rapport au premier axe de pivotement (s1), un renforcement (9), en particulier une paroi de renforcement (91), disposée perpendiculairement au premier axe de pivotement (s1).

3. Maillon de chaîne selon la revendication 1 ou 2, **caractérisé en ce que**, en s'étendant respectivement dans la direction longitudinale (1), au moins une première saillie (43) avec le premier moyen de liaison (45) est disposée dans la première zone de liaison (41) et au moins une deuxième saillie (44) avec le deuxième moyen de liaison (46) est disposée dans la deuxième zone de liaison (42).

4. Maillon de chaîne selon la revendication 3, **caractérisé en ce que** sont prévues dans la première zone de liaison (41) au moins deux saillies réalisées sous forme de premières saillies (43) et dans la deuxième zone de liaison (42) au moins trois saillies réalisées sous forme de deuxièmes saillies (44), les saillies (43, 44) étant disposées axialement l'une à la suite de l'autre par rapport au premier axe de pivotement (s1) et dans un ordre alterné.

5. Maillon de chaîne selon l'une quelconque des revendications 1 à 4, **caractérisé en ce qu'**il est conçu pour un premier mouvement relatif supplémentaire de deux maillons de chaîne (3) voisins sous la forme d'un pivotement des maillons de chaîne (3) autour d'un deuxième axe de pivotement (s2) s'étendant dans la direction longitudinale (1) et/ou pour un deuxième mouvement relatif supplémentaire des maillons de chaîne (3) sous la forme d'une translation des maillons de chaîne (3) perpendiculairement ou approximativement perpendiculairement à la direction longitudinale (1) et à la direction transversale (q) des maillons de chaîne (3).

6. Maillon de chaîne selon l'une quelconque des revendications 1 à 5, **caractérisé en ce que** le dispositif de blocage (7) est pourvu d'une saillie de blocage (71) disposée à chaque extrémité sur les côtés étroits (24) orientés dans la direction transversale (q) et dans la première zone de liaison (41) du maillon de chaîne (3) et d'une ouverture de blocage (72) disposée à chaque extrémité sur les côtés étroits (24) orientés dans la direction transversale (q) et dans la deuxième zone de liaison (42) du maillon de chaîne (3), laquelle ouverture de blocage est réalisée ouverte latéralement vers le deuxième côté (23) du maillon de chaîne (3), de sorte qu'une saillie de blocage (71) disposée dans la première zone de liaison (41) d'un maillon de chaîne (3) voisin peut glisser dans l'ouverture de blocage (72), et l'ouverture de blocage (72) présente, dans la direction allant du deuxième côté (23) vers le premier côté (22), une paroi latérale (73) qui s'oppose, en tant que butée, au mouvement d'un maillon de chaîne (3) voisin avec sa saillie de blocage (71) dans la direction de la normale à la surface du premier côté (22).

7. Chaîne de manutention comprenant un corps (3) constitué d'une pluralité de maillons (3) adjacents les uns aux autres dans la direction longitudinale (1) de la chaîne de manutention (1) selon l'une des revendications 1 à 6, les maillons (3) étant reliés entre eux dans leurs zones de liaison (41, 42) adjacentes de manière à pouvoir pivoter autour d'un premier axe de pivotement (s1) s'étendant dans la direction transversale (q), pour former une liaison articulée à charnière (5) avec le partenaire d'articulation (51) respectif et présentent chacun au moins une zone de liaison réalisée sous la forme d'une première zone de liaison (41), qui est conçue de telle sorte que la liaison articulée à charnière (5) permet, en plus de la pivotement autour du premier axe de pivotement (s1), au moins un autre mouvement relatif des partenaires d'articulation (51).

8. Chaîne de manutention selon la revendication 7, **caractérisé en ce que** les moyens de liaison (45, 46) sont disposés chacun dans ou sur une saillie (43, 44) qui s'étend dans la direction longitudinale (1) en s'éloignant de la zone de liaison respective (41, 42), les saillies (45, 46) de deux partenaires d'articulation (51) étant disposées de manière à s'engager l'une dans l'autre à la manière de dents et à s'appliquer latéralement l'une contre l'autre, de préférence avec un certain jeu.

9. Chaîne de manutention selon la revendication 7 ou 8, **caractérisé en ce qu'**il s'agit d'une chaîne de transport (11) pour le transport, par exemple, de marchandises (G) ou d'un outil (W) pour l'exécution d'une opération ou **en ce qu'**il s'agit d'une chaîne de guidage (12) pour la réception et le guidage de conduites d'alimentation entre deux points de raccordement mobiles l'un par rapport à l'autre.
